Europäisches Patentamt

European Patent Office

Office européen des brevets

(11) Publication number: **0 375 425**
**A2**

## (12) EUROPEAN PATENT APPLICATION

(21) Application number: 89313444.5

(22) Date of filing: 21.12.89

(51) Int. Cl.⁵: **G02F 1/1333, G03B 21/16**

(30) Priority: 22.12.88 JP 166219/88 U
22.12.88 JP 166220/88 U

(43) Date of publication of application:
**27.06.90 Bulletin 90/26**

(84) Designated Contracting States:
**DE FR GB IT**

(71) Applicant: **SEIKO INSTRUMENTS INC.**
**31-1, Kameido 6-chome Koto-ku**
**Tokyo 136(JP)**

(72) Inventor: **Mandai, Masaaki**
**c/o Seiko Instruments Inc. 31-1 Kameido**
**6-chome**
**Koto-ku Tokyo(JP)**

(74) Representative: **Caro, William Egerton et al**
**J. MILLER & CO. Lincoln House 296-302 High**
**Holborn**
**London WC1V 7JH(GB)**

(54) **Projection pad incorporating a liquid crystal panel.**

(57) A projection pad has a transmission type liquid crystal panel (4) for providing a display for projection onto a projection surface, and an axial flow blower (6) for generating an air flow for cooling the panel. A space forming an air passageway is provided between the panel and an outer casing (1, 5) of the pad by means of ribs (7). External air drawn in by the axial flow blower is directed by the blower into the air passageway so as to flow over the panel for cooling purposes.

FIG.1

EP 0 375 425 A2

## PROJECTION PAD INCORPORATING A LIQUID CRYSTAL PANEL

The present invention concerns a projection pad incorporating a liquid crystal panel of the transmission type for placing between a light source and a screen, whereby an image displayed on the surface of the liquid crystal panel is projected onto the screen.

A projection pad in which a transmission type liquid crystal panel is placed between a light source and a screen, and an image on the surface of the liquid crystal panel is displayed on a screen is known. In this type of projection pad, the energy of the light projected from the light source is partially converted into heat energy inside the projection pad, which increases the temperature of the projection pad thereby causing problems such as the liquefication of liquid crystals, abnormal operation of the panel controlling circuit, etc.

Heretofore, various articles of this kind, designed to be placed on a OHP (over head projector) for projecting an image onto a screen, have been commercially available. As cooling mechanisms, a so called Silocco blower of a cylindrical shape (for example, DATA DISPLAY DD-2000, manufactured by Eiki Kogyo) has been used, as also have two axial flow blowers (for example, SUPER VIEW PWS 5156A, Toshiba) arranged to cool the inside of the projection pad with external air.

Further, for the control of the projection pad per se, i.e. for the input of information instructing operations of the projection pad such as luminance control, reverse display, etc.), two options may be considered, i.e. a method of remote control and a method of providing switches, variable registers, etc. on each of the controlling functions required for the inside of a presentation pad.

However, if a Silocco blower is used as the conventional cooling mechanism for the projection pad, the size of the blower must be relatively large (the cylindrical shape requiring a large diameter and long length), making it difficult to reduce the size and the thickness of the system. Further, when a plurality of axial blowers is used, their layout requires a substantial space, which also hinders a reduction of the size.

Furthermore, if a remote controller sensor is mounted on a control circuit substrate for the control of the projection pad, reduction of size becomes difficult. Alternatively, if switches, various resistances, etc. are provided for each of the controlling functions required in the presentation pad, a large area is required for the layout of the parts such as the switches or variable registers and, in addition, the thickness of the pad is increased and the controlling mechanisms have to be accessed in a state attached to an outer casing. Accordingly, the shape of the outer casing is complicated and high accuracy is necessary for the fitting between the outer casing and the control circuit, which hinders reduction of the size and the thickness as well as increasing the labour in the assembling operation.

Further, in apparatus of this kind, it is necessary to prevent the occurrence of radio wave interference, and counter measures, such as disposing electro-magnetic shielding structures on the outer casing, etc. have been applied. The shield plate also hinders any reduction in the size and the thickness, as well as tending to reduce ventilation.

It is an object of the present invention to provide a projection pad using a liquid crystal panel.

According to the present invention, there is provided a projection pad incorporating a transmission type liquid crystal panel for providing a display for projection onto a projection surface, and an axial flow blower for generating an air flow for cooling the panel, characterised in that a space forming an air passageway is provided between the liquid crystal panel and an outer casing of the projection pad by means of protrusions projecting in the direction of the thickness of the liquid crystal panel, and in that a flow path for conveying air within the projection pad is defined by a first port in the outer casing, the axial flow blower, the air passageway and a further port in the outer casing.

In the present invention, the structure of the cooling mechanism is conveniently adapted such that sufficient cooling effect can be obtained by an axial flow blower small in size and reduced in thickness, thereby enabling the size and decrease in thickness of the projection pad itself to be reduced.

The invention preferably features ribs for introducing an air stream near the axial flow blower to the space put between the liquid crystal panel and the outer casing arranged so as to provide an efficient flow passageway as well as an improved shielding structure to cause less resistance to air flow, thereby enabling a satisfactory cooling function to be achieved with an axial flow blower of small capacity.

Furthermore, by providing a sensor for an infrared remote controller separately from a control circuit and at a position outside the circuit capable of affording a margin in the direction of the thickness of the panel, increase of the thickness of the projection pad by the thickness of the remote controller sensor can be prevented.

The invention will be described further, by way of example, with reference to the accompanying drawings, in which:-

Figure 1 is an exploded view of a projection pad incorporating a liquid crystal panel according to the present invention; and

Figure 2 is a plan view in the direction of the arrow A in Figure 1 showing a shield plate of a control circuit of the projection pad.

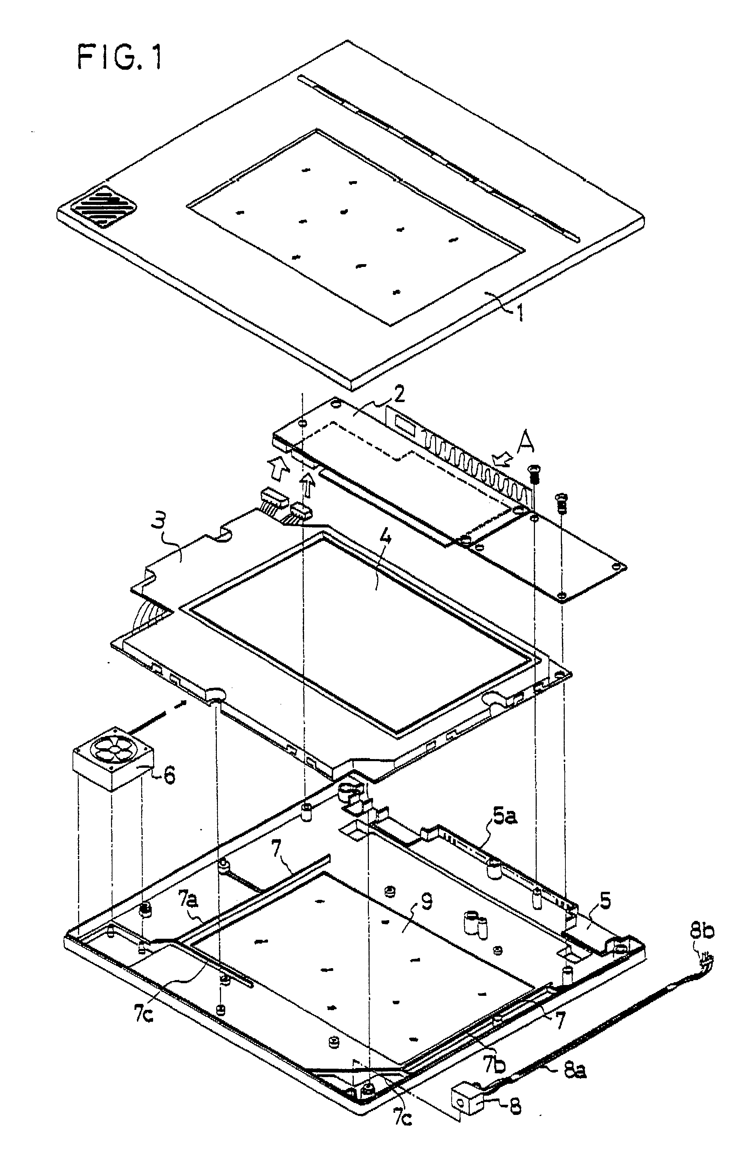

Figure 1 is an exploded view of one embodiment of a projection pad according to the present invention. A transmission type liquid crystal panel module 3 includes a driving circuit attached to a liquid crystal panel 4 for driving the latter and on a metal chassis plate and covered with a metal cover. The module 3 is connected to a control circuit 2, and they are mounted between an upper outer casing 1 and an lower outer casing 5. The lower outer casing 5 has a structure designed to mount an axial flow blower 6 as shown in the Figure and, in addition, is provided with enclosing protrusions, shown as ribs 7. The metal chassis plate of the transmission type liquid crystal panel module 3 just fits over the ribs 7, so that the air stream created by the axial flow blower 6 can pass throughout the enclosed space.

Heat energy received by the projection pad from the projection light of an OHP is not entirely uniform but forms a peak like distribution, such that greater energy is received in the central portion but not so much energy is received in the outer peripheral portion. Accordingly, if the entire surface is cooled uniformly, a peak like temperature distribution is formed so that, if it is intended to cool the region at the top of the distribution to less than a pre-determined temperature, a substantial amount of air must flow overall. For effective cooling with less air flow in the present invention, a greater amount of air is introduced into the central portion and a relatively smaller amount of air is introduced into the outer peripheral portion of the panel 4. It is thus possible effectively to cool the various portions requiring cooling so as to establish a state in which the temperature distribution over the entire projection pad is nearly uniform. In the embodiment shown in Figure 1, external air sucked in by the axial flow blower 6 is caused to flow in the direction of the panel surface and cooling is effected concentrically near the central portion of the panel. Conventionally, an axial flow blower is usually arranged such that warmed air is sucked out by the axial flow blower and a negative pressure is formed in the closed space within the system to thereby suck in the external air. Accordingly, the arrangement just described above is quite contrary thereto, in that the axial flow blower sucks in the cold external air and blows it to the hot region.

In this embodiment, air from the space below the axial flow blower 6 is sent to a space enclosed by the ribs 7a, 7b, 7c, 7d, a glass plate 9 of the lower outer casing 5 and the transmission type liquid crystal panel 4, for effecting cooling. The ribs 7c and 7d are shaped such that the flow rate of the air is greater in the central portion and decreases towards both of the sides of the panel. In this embodiment, the air flow is generated mainly in the space between the liquid crystal panel 4 and the lower outer casing glass plate 9, and air flow occurs less between the liquid crystal panel 4 and the upper outer casing 1. Such a structure is adopted since heat generation as a result of the projected light occurs mainly in the space below the panel 4.

In Figure 1, an infra-red remote controller sensor 8 is set at a position as shown and is connected by way of a remote control cable 8a and a remote control connector 8b with the control circuit 2. In such a structure, it may be a concern that erroneous operation may occur due to noise entering from the outside or generated in the inside of the pad. However, in the embodiment shown in Figure 1, although the remote control cable 8a is about 20 cm in length, it can be confirmed that such mis-operation is not caused.

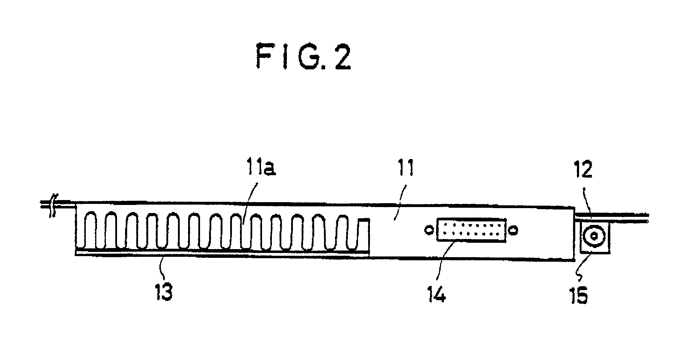

Figure 2 is a side view of the control circuit 2 taken in the direction of the arrow A in Figure 1. A shield plate 11 is perforated with comb like slits 11a so as not to hinder the air flow created by the axial flow blower 6. It has been confirmed experimentally that the slits 11a provide sufficient shielding so long as the pitch is 5 mm and the duty ratio is 2:3 (adaptable to VCI, FCC, etc). In the projection pad shown in Figure 1, metal sheets provided in the upper portion of the lower outer casing 5 and the lower portion of the upper outer casing 1 are disposed on both sides of the control circuit 2, so that radio waves can be prevented from entering in the vertical direction and causing interference.

As has been described above, in the present invention, the entire system can be cooled effectively and uniformly with a lesser amount of air flow, by forming an air passageway by the provision of protrusions, such as ribs, on the outer casing etc., The flow of air generated by the axial flow blower can thus be skillfully controlled. The invention as described also conforms to the standards for radio wave interference.

## Claims

1. A projection pad incorporating a transmission type liquid crystal panel (4) for providing a display for projection onto a projection surface, and an axial flow blower (6) for generating an air flow for cooling the panel, characterised in that a space forming an air passageway is provided between the liquid crystal panel and an outer casing (1, 5) of the projection pad by means of protrusions (7) projecting in the direction of the thickness of the liquid crystal panel, and in that a flow path for conveying air within the projection pad is defined by a first port in the outer casing, the axial flow blower, the air passageway and a further port in the outer casing.

2. A projection pad according to claim 1 characterised in that the protrusions are ribs (7a to 7d).

3. A projection pad according to claim 1 or 2, characterised in that the protrusions are arranged to direct a relatively large proportion of the air flow over a central portion of the liquid crystal panel and a relatively small proportion of the air flow over an outer portion of the liquid crystal panel.

4. A projection pad according to claim 1, 2 or 3, characterised in that the axial flow blower is arranged to suck in external air and to blow the external air over the liquid crystal panel.

5. A projection pad according to any of claims 1 to 4, characterised in that a ventilated shield plate (11) is attached to a control circuit (2) of the projection pad for controlling the liquid crystal panel.

6. A projection pad according to any of claims 1 to 4, characterised in that a remote controller sensor (8) and a control circuit (2) are provided for controlling the liquid crystal panel, and in that the remote controller sensor is an infra-red sensor connected by a wire harness to the control circuit and is thereby placed at a position different from that of the control circuit.

7. A projection pad characterised by a transmission type liquid crystal panel module (3), a control circuit (2) for controlling said transmission type liquid crystal panel module, an axial flow blower (6), a remote controller sensor (8) and an outer casing (1, 5) as the main constituent elements, in which the transmission type liquid crystal panel module is adapted to be placed between a light source and a projection surface whereby the display content on the surface of the liquid crystal panel is projected on said projection surface, and wherein a space in the direction of thickness put between the transmission type liquid crystal panel (4) and the outer casing is formed as a tunnel like space for an air pass way by ribs (7) standing vertically in the direction of the thickness, by which external air is hydro-dynamically communicated through an air path port opened in the outer casing and by way of external air-axial flow blower-tunnel-like space as the air pass way-another air path port.

FIG.1

EP 0 375 425 A2

# FIG. 2